Europäisches Patentamt

European Patent Office

Office européen des brevets

(11) Publication number: **0 296 555 B1**

# EUROPEAN PATENT SPECIFICATION

(45) Date of publication of patent specification: **22.04.92**      (51) Int. Cl.5: **B60H 1/00**

(21) Application number: **88109913.9**

(22) Date of filing: **22.06.88**

(54) **Drum-shaped distributor for motor vehicle air-conditioning systems.**

(30) Priority: **26.06.87 IT 5348187 U**

(43) Date of publication of application:
**28.12.88 Bulletin 88/52**

(45) Publication of the grant of the patent:
**22.04.92 Bulletin 92/17**

(84) Designated Contracting States:
**DE ES FR IT SE**

(56) References cited:
**DE-A- 3 119 557**
**FR-A- 1 263 974**
**FR-A- 1 324 566**
**FR-A- 2 349 468**
**GB-A- 973 035**

(73) Proprietor: **BORLETTI CLIMATIZZAZIONE S.r.l.**
**Frazione Masio, 24**
**I-10046 Poirino (Torino)(IT)**

(72) Inventor: **Baro, Sergio**
**Via Montelera, 14/2**
**I-10040 Val Della Torre Torino(IT)**

(74) Representative: **Buzzi, Franco et al**
**c/o Jacobacci-Casetta & Perani S.p.A. Via**
**Alfieri, 17**
**I-10121 Torino(IT)**

EP 0 296 555 B1

# Description

The present invention relates to a drum-shaped distributor for motor vehicle air-conditioning systems, of the type having a stator provided with a radial inlet aperture and angularly-spaced radial outlet apertures, and two obturators for controlling the air flow through the radial inlet and outlet apertures.

A distributor of the above type is disclosed by GB-A-973 035 which shows, in a vehicle heating and cooling unit, an air inlet compartment of cylindrical form which contains two valves each pivotally mounted on the axis of the container by way of pairs of radial arms. The valves are independently operated by means of cables attached to one arm of each pair of arms and extending through radial slots in the wall of the compartment. Such arrangement needs at least two levers or similar manually operated devices for controlling the air flow through the radial outlet apertures. Moreover the presence of radial slots in the wall of the compartment for the passage of cables reduces the overall efficiency of the distributor.

The object of the present invention is to provide a distributor which optimises distribution of the air within the passenger compartment of a motor vehicle in a simple, efficient and economical manner.

According to the invention, this object is achieved by virtue of the fact that a first obturator is integral with a rotor coaxial with the stator and that a second obturator is carried by a support connected to the rotor, so as to be coaxially internally rotatable therewith, means being interposed between the rotor and the second obturator for effecting the rotation of the rotor and the simultaneous differential rotation of the second obturator.

By virtue of this characteristic, it is easy to achieve comfortable conditions within the passenger compartment with correct distribution of the air and, if required; correct temperature distribution, by controlling the laws of opening of the air vents and by operating only one lever or similar manually operated device.

Further advantages and characteristics of the distributor according to the present invention will become clear from the following detailed description, provided purely by way of non-limiting example, with reference to the appended drawings, in which:

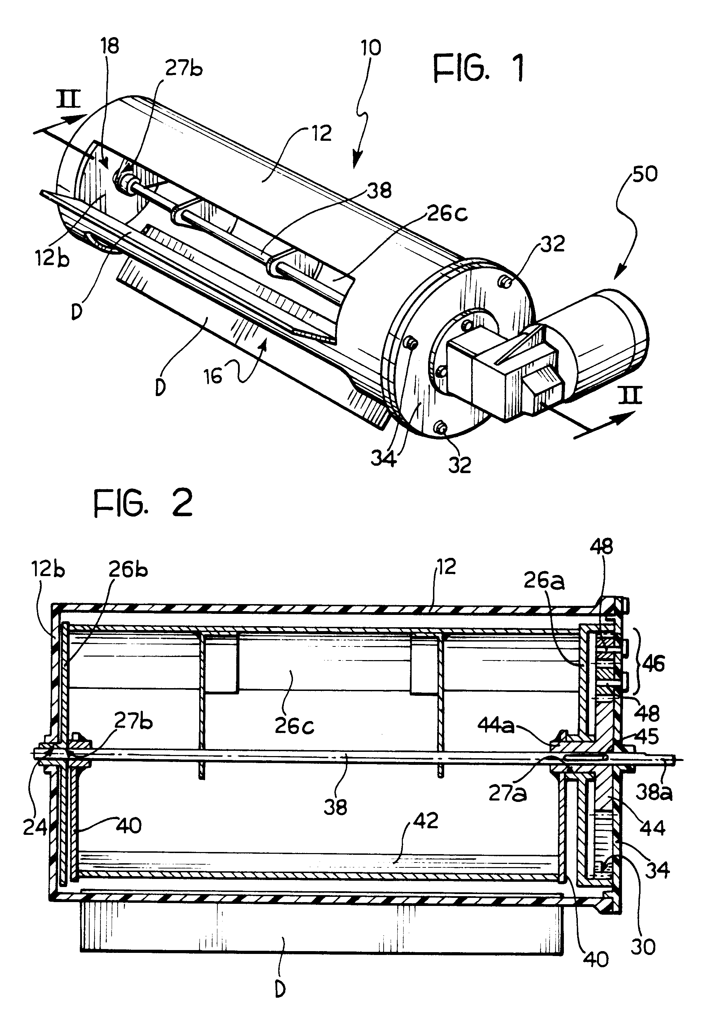

Figure 1 is a perspective view of a distributor according to the invention,

Figure 2 is a section taken on the line II-II of Figure 1,

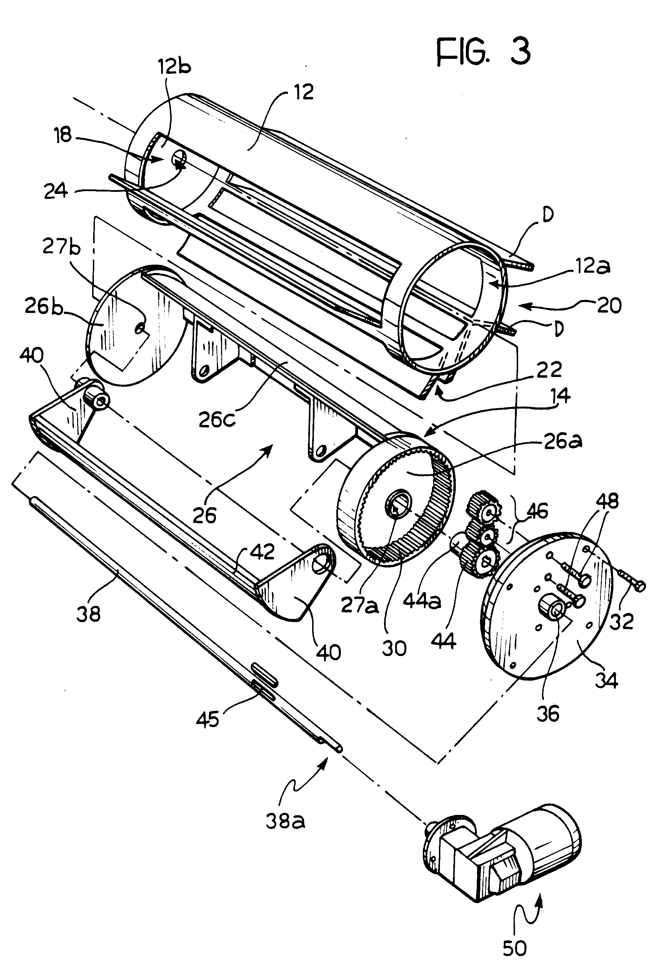

Figure 3 is an exploded perspective view of the device of Figure 1,

Figure 4 is a schematic cross-section of the device of Figure 1, illustrating its operation in a first configuration,

Figure 5 is a view similar to Figure 4 and illustrates the operation of the distribution in a second configuration, and

Figure 6 is a view similar to Figures 4 and 5 and illustrates the operation of the distributor in a third configuration.

With reference to the drawings, a drum-shaped distributor for motor vehicle air-conditioning systems is generally indicated 10 and includes a stator 12 and a rotor 14.

The stator 12 has a circular cylindrical conformation and is provided with a radial air inlet aperture 16 and three radial air outlet apertures 18, 20 and 22. Both the inlet aperture 16 and the outlet apertures 18, 20 and 22 are provided with deflectors D for directing the air flow towards respective ducts (not illustrated). The stator 12 is further provided with an end aperture 12a and with an end wall 12b having a central through-hole 24.

A rotor 26 is mounted rotatably within the stator 12 and comprises two end discs, 26a and 26b respectively, provided with respective central holes 27a and 27b between which is interposed a first obturator 26c having a curvilinear cross-section and dimensions which correspond substantially to those of the outlet apertures 18 and 20. In correspondence with the end disc 26a, the rotor 26 has an internal ring gear 30 whose function will become clear in the continuation of the description.

A support cover 34 carrying a central bush 36 is fixed to the stator 12 in correspondence with the end aperture 12a by means of screws 32. The bush 36 and the hole 24 in the end wall 12b of the stator 12 rotatably support a drive shaft 38 which rotatably supports both the rotor 26 in correspondence with its holes 27a and 27b and, through radial supports 40, a second obturator 42 having a curvilinear cross-section and a shape corresponding substantially to that of the outlet aperture 22.

A gear 44 for rotating the rotor 26 through the ring gear 30 is interposed between the end disc 26a situated in correspondence with the frontal aperture 12a of the stator 12 and the support cover 34, and is keyed at 45 to the drive shaft 38 to cooperate with a train of gears 46 rotatably supported by pins 48 fixed to and projecting from the support cover 34. The gear 44 keyed to the shaft 38 also has a tubular end portion 44a mounted rotatably within the hole 27a of the end disc 26a and keyed to one of the radial supports 40 of the second obturator 42.

The drive shaft 38 is connected at one of its ends 38a to a geared motor 50 supported by the cover 34 of the distributor 10 and connected to the electrical system of the motor vehicle.

During operation of the distributor 10, the second obturator 42 is rotated directly by the rotation of the drive shaft 38 by means of the keying between the portion 44a of the gear 44 which is keyed to the shaft 38 and the radial support 40 situated adjacent the end disc 26a of the rotor 26. The latter is rotated by the shaft 38 through the gear 44, the train of gears 46 and the ring gear 30. It is clear that the rotation of the first obturator 26c and the second obturator 42 about the central axis defined by the drive shaft 38 takes place simultaneously and according to different laws of motion in dependence on the configuration both of the gear 44 and the ring gear 30 and of the train of gears 46. The rotation of the first obturator 26c and the second obturator 42 at different speeds can therefore be in phase (the same sense of rotation) or in counterphase (different senses of rotation).

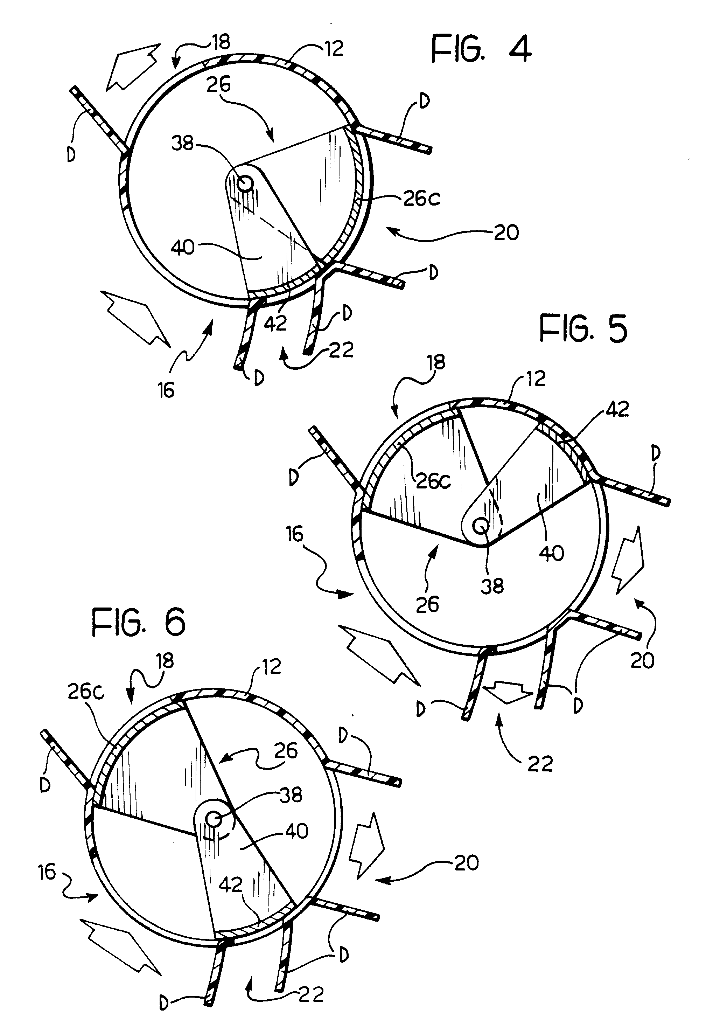

Figures 4-6 show three different configurations of the distributor 10 with particular reference to the case in which the outlet aperture 18 is adapted to be connected to the air vents situated at the base of the windscreen (vents for defrosting the windscreen) and the case in which the outlet apertures 20 and 22 are adapted to be connected to central air vents and downward-facing air vents.

In the configuration described in Figure 4, the first obturator 26c, which is fast with the rotor 26, is arranged in such a position that it closes the aperture 20 to the central air vents and the second obturator 42 is situated in such a position that it closes the aperture 22 in correspondence with the downward-facing air vents. In this way, all the air entering through the aperture 16 is directed towards the aperture 18 connected to the vents for defrosting the windscreen.

Figure 5 illustrates a configuration in which the first obturator 26c closes the outlet aperture 18 and in which the second obturator faces the side wall of the stator 12 without closing any outlet aperture. In this configuration, all the air entering through the aperture 16 is directed both to the central air vents through the axial aperture 20 and to the downward-facing air vents through the axial aperture 22.

In the third configuration illustrated in Figure 6, the first obturator 26c closes the outlet aperture 18, whilst the second obturator 42 closes the outlet aperture 22. In this way, all the air entering through the aperture 16 is directed to the aperture 20 in communication with the central air vents.

It is clear that the three configurations described above are typical configurations of the distributor device 10 which can, however, assume an infinite number of different intermediate configurations in dependence on the requirements for optimal conditioning of the passenger compartment of the motor vehicle.

Moreover, the rotation of the obturators may be achieved by a single manually operated device (lever), instead of by a geared motor.

## Claims

1. A drum-shaped distributor (10) for motor vehicles air-conditioning systems, of the type having a stator (12) provided with a radial inlet aperture (16) and angularly-spaced radial outlet apertures (18, 20, 22), and two obturators (26c, 42) for controlling the air flow through the radial inlet and outlet apertures (16, 18, 20, 22), characterised in that a first obturator (26c) is integral with a rotor (26) coaxial with the stator (12) and in that a second obturator (42) is carried by a support (40) connected to the rotor (26) so as to be coaxially internally rotatable therewith, means (38, 44, 46, 30, 44a) being interposed between the rotor (26) and the second obturator (42) for effecting the rotation of the rotor (26) and the simultaneous differential rotation of the second obturator (42).

2. A distributor according to Claim 1, characterised in that the means for rotating the support (40) of the second obturator (42) comprise a drive shaft (38) keyed to the support (40), and in that the means for rotating the rotor (26) comprise a series of gears (44, 46, 30) which cooperate with each other and are driven by the shaft (38).

3. A distributor according to Claim 2, characterised in that the rotor (26) comprises at least one end disc (26a) provided with an internal ring gear (30) which cob-operates with a central gear (44) keyed to the shaft (38) through a series of gears (46).

## Revendications

1. Distributeur (10) en forme de tambour, pour systèmes de conditionnement d'air de véhicules à moteur, du type qui comprend un stator (12) muni d'une ouverture d'entrée radiale (16) et d'ouvertures de sortie radiales (18, 20, 22) espacées angulairement, et deux obturateurs (26c, 42) destinés à commander l'écoulement de l'air à travers les ouvertures d'entrée et de sortie radiales (10, 18, 20, 22), caractérisé en ce qu'un premier obturateur (26c) est d'une seule pièce avec un rotor (26) coaxial au stator (12) et en ce qu'un deuxième obturateur (42) est porté par un support (40) relié au rotor (26) de manière à pouvoir tourner avec ce rotor coaxialement à l'intérieur, des moyens (38, 44, 46, 30, 44a) étant interposés entre le rotor (26) et le deuxième obturateur (42) pour commander la rotation du rotor (26) et la rotation différentielle simultanée du deuxième obturateur (42).

2. Distributeur selon la revendication 1, caractérisé en ce que les moyens servant à faire tourner le support (40) du deuxième obturateur (42) comprennent un arbre d'entraînement (38) rendu solidaire du support (40) par clavetage, et en ce que les moyens servant à faire tourner le rotor (26) comprennent une série de roues dentées (44, 46, 30) qui coopèrent entre elles et sont entraînées par l'arbre (38).

3. Distributeur selon la revendication 2, caractérisé en ce que le rotor (26) comprend au moins un disque d'extrémité (26a) muni d'une couronne dentée à denture intérieure (30) qui coopère avec une roue dentée centrale (44) clavetée sur l'arbre (38) par l'intermédiaire d'une série de roues dentées (46).

**Patentansprüche**

1. Ein trommelförmiger Luftverteiler (10) für die Klimaanlage von Kraftfahrzeugen der Art, daß er einen Stator (12) aufweist, der mit einer radial verlaufenden Einlaßöffnung (16) und mit in Winkelabstand radial verlaufenden Auslaßöffnungen (18, 20, 22) sowie zwei Verschlüssen (26c, 42) versehen ist, um den Luftstrom durch die radial verlaufenden Einlaßund Auslaßöffnungen (16, 18, 20, 22) zu regeln, gekennzeichnet dadurch, daß ein erster Verschluß (26c) fest, insbesondere einstückig, mit einem Rotor (26), der koaxial zu dem Stator (12) liegt, verbunden ist und dadurch, daß ein zweiter Verschluß (42) von einer Halterung (40) getragen ist, die mit dem Rotor (26) derart verbunden ist, daß sie innen koaxial damit drehbar ist und daß Hilfsmittel (38, 44, 46, 30, 44a) zwischen dem Rotor (26) und dem zweiten Verschluß (42) zwischengeschaltet sind, um die Drehung des Rotors (26) und eine gleichzeitige differenzielle Drehung des zweiten Verschlusses (42) zu bewirken.

2. Ein Luftverteiler gemäß Anspruch 1,gekennzeichnet dadurch, daß die Hilfsmittel zum Drehen der Halterung (40) des zweiten Verschlusses (42) eine Antriebswelle (38) umfassen, die mit der Halterung (40) drehfest verbunden ist, und daß die Hilfsmittel zum Drehen des Rotors (26) eine Reihe von Zahnrädern (44, 46, 30) umfassen, die zusammenarbeiten, und die von der Welle (38) angetrieben werden.

3. Ein Luftverteiler gemäß Anspruch 2, gekennzeichnet dadurch, daß der Rotor (26) mindestens eine Endscheibe (26a) aufweist, die mit einem Innenzahnkranz (30) versehen ist, der mit einem an der Welle (38) drehfesten Zentralzahnrad (44) über eine Reihe von Zahnrädern (46) zusammenarbeitet.

FIG. 1

FIG. 2

FIG. 3

FIG. 4

FIG. 5

FIG. 6